# EUROPEAN PATENT SPECIFICATION

(11) **EP 0 433 245 B1**
(45) Date of publication and mention of the grant of the patent: **13.07.1994**
(21) Application number: 90830518.8
(22) Date of filing: 13.11.1990
(51) Int. Cl.: B60H 1/00, F16C 1/26

(54) **A device for operating movable parts of motor-vehicle air-conditioning systems**
Einrichtung zum Betätigen von beweglichen Teilen von Kraftfahrzeugklimaanlagen
Dispositif pour commander des parties mobiles d'un système de climatisation de véhicule automobile

(30) Priority: 16.11.1989 IT 5348689 U
(43) Date of publication of application: 19.06.1991
(73) Proprietor: BORLETTI CLIMATIZZAZIONE S.r.l., 10046 Poirino (Torino) (IT)
(72) Inventor: Cristante, Luigi, I-10091 Alpignano (IT)
(74) Representative: Quinterno, Giuseppe

(56) References cited:
- EP-A- 0 097 878
- EP-A- 0 183 019
- DE-A- 2 246 240
- GB-A- 2 166 211
- US-A- 4 238 971

## Description

### A device for operating movable parts of motor-vehicle air-conditioning systems

The present invention relates to a device for operating movable parts, particularly parts of motor-vehicle air-conditioning systems, of the type defined in the preamble of Claim 1.

By the movable parts of a motor-vehicle air-conditioning system is meant all those parts which can vary the path of the air-flow or the heat level of a fluid (for example heat-exchanger valves, flow-dividing shutters, etc.).

A device of the above-specified kind, including a Bowden cable for transmitting a movement to a movable part, is disclosed in EP-A-0 097 878.

The aim of the present invention is to provide a device of the afore-said type adapted to be quickly assembled and having a very simple structure.

According to the invention, this aim is achieved by a device according to claim 1.

The sheath thus orients automatically into the most suitable position to allow the cable to slide easily therein.

Further advantages and characteristics of the device according to the invention will become clear from the detailed description which follows, provided purely by way of non-limiting example, with reference to the appended drawings, in which:

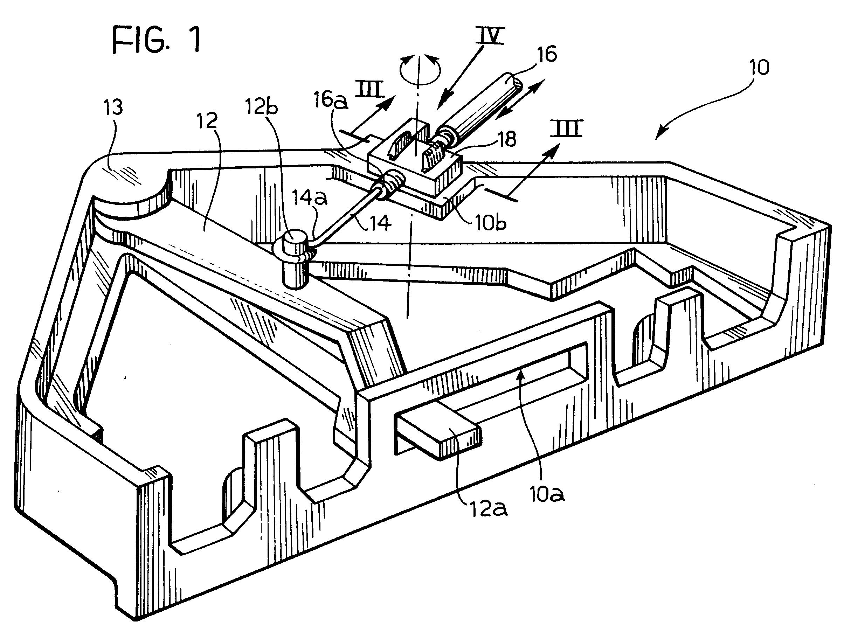

Figure 1 is a perspective view of an operating device according to the invention,
Figure 2 is a plan view of the transmission means of the operating device of Figure 1,
Figure 3 is a section taken on the line III-III of Figure 1, and
Figure 4 is an exploded perspective view of a detail of Figure 1.

With reference to the drawings, a structure indicated 10 supports an operating lever 12 articulated to the structure at 13. The structure 10 is mounted, for example, on the control panel of a motor-vehicle air-conditioning system and includes a slot 10a in which one end 12a of the lever is mounted. Alternatively, instead of the end 12a of the lever 12, a slider connected to the lever 12 may be mounted in the slot 10a.

The operating lever 12 has a transverse pin 12b to which is connected one end 14a (which is bent, for example, to form an eye) of a flexible metal cable 14, slidable in a flexible metal sheath 16. A first end 16a of the sheath 16 adjacent the operating lever 12 is co-moulded with, or in some way inserted in and fixed to, a block 18 of plastics material having a transverse hole 18a, in which the metal sheath 16d is inserted, and a resilient pin 18b which is snap-engaged in a through-hole 20 in a bracket-like portion 10b of the support structure 10.

The block 18 has two circular arcuate slots 22 on diametrally opposite sides of the articulation pin 18b for cooperating with resilient parallel tabs 24 integral with the bracket-like portion 10b of the support structure 10 and on diametrally opposite sides of the hole 20. Each resilient tab 24 has a tooth 24a at its free end for resiliently snap-engaging the block 18 as a result of its insertion in the respective slot 22.

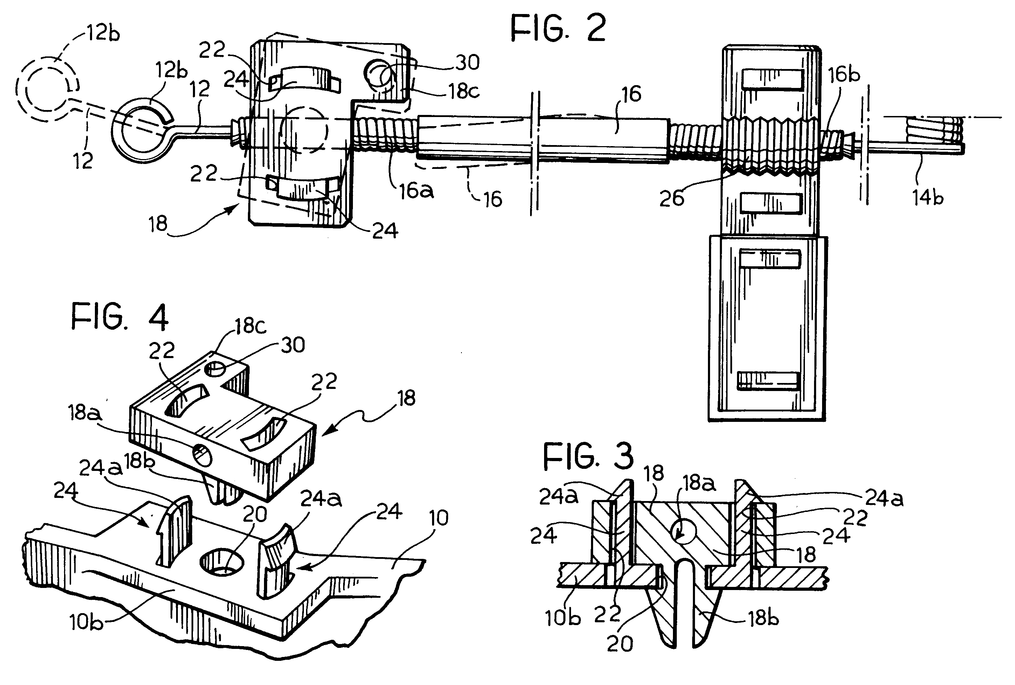

The flexible sheath 16 has a second end 16b fixed at 26 to another component of the support structure 10 and the flexible cable 14 has a second end 14b connected to a movable part (not shown). Obviously, the combined flexible cable 14 and sheath 16 (which together constitute a so-called Bowden cable) may take quite complex routes as well as the straight route shown in Figure 2.

The block 18 is mounted on the support structure 10 instantaneously by the resilient snap-engagement of the pin 18b and the tabs 24. During the operation of the device, the cable 14, which is fixed to the operating lever 12, may assume configurations which are not ideal as regards its operation without friction with the sheath 16 (the ideal configuration is shown in Figure 2). The fact that the block 18 can pivot on the pin 18b (its rotation being limited by the presence of the tabs 24) enables the orientation of the end 16a of the sheath 16 to vary so that it can assume a different position such as that shown in broken outline in Figure 2.

In order for the sheath 16 and the co-moulded block 18 to be mounted on a support structure 10 which does not have the hole 20 and the tabs 24, the block 18 has a lateral appendage 18c with a hole 30 so that it can be fixed firmly to the support structure, for example by a screw.

Naturally, it is intended that the scope of the present invention should extend to models which achieve equal utility by means of the same innovative concept.

## Claims

1. A device for operating movable parts, particularly parts of motor-vehicle air-conditioning systems, of the type comprising an operating lever (12) articulated to a support structure (10) and a flexible movement-transmission cable (14) interposed between the operating lever (12) and the movable part and having a sheat (16) fixed at at least one end to the support structure (10), the end (16a) of the sheath (16) being fixed to an auxiliary element (18) articulated to the support structure (10, 10b) so that the orientation of the end (16a) of the sheath (16) can vary during the operation of the lever (12); characterised in that the auxiliary element (18) has a lateral articulation pin (18b) for resilient snap-engagement in a suitable hole (20) in the structure (10b) and at least one slot (22) for cooperating with a corresponding tab (24, 24a) integral with the support structure (10b, 10) for limiting the rotation of the auxiliary element (18) about the pin (18b).

2. A device according to Claim 1, characterised in that the auxiliary element (18) is co-moulded with the sheath (16).

3. A device according to Claim 1, characterised in that the support structure (10) has two parallel resilient tabs (24) on diametrally opposite sides of the hole (20) for resilient snap-engagement in corresponding shaped slots (22) in the auxiliary element (18), the dimensions of the slots (22) being such as to allow a predetermined rotation of the auxiliary element (18) relative to the support structure (10, 10b).

## Patentansprüche

1. Vorrichtung zur Betätigung bewegbarer Teile, insbesondere Teile eines Kraftfahrzeug-Klimaanlagensystems, des Typs, welcher einen an einem Trageaufbau (10) angelenkten Betätigungshebel (12) umfaßt sowie ein flexibles Bewegungsübertragungskabel (14), welches zwischen dem Betätigungshebel (12) und dem bewegbaren Teil angeordnet ist und eine Hülse (16) aufweist, die an wenigstens einem Ende an dem Trageaufbau (10) festgelegt ist, wobei das Ende (16a) der Hülse (16) an einem Hilfselement (18) festgelegt ist, welches an dem Trageaufbau (10, 10b) angelenkt ist, so daß die Orientierung des Endes (16a) der Hülse (16) sich während der Betätigung des Hebels (12) verändern kann,
dadurch gekennzeichnet,
daß das Hilfselement (18) einen seitlichen Gelenkstift (18b) aufweist zum elastischen Rasteingriff in ein geeignetes Loch (20) in dem Aufbau (10b), sowie wenigstens einen Schlitz (22) zur Zusammenwirkung mit einem entsprechenden Vorsprung (24, 24a), welcher mit dem Trageaufbau (10b, 10) integral ausgebildet ist, zur Einschränkung der Drehung des Hilfselements (18) um den Stift (18b).

2. Vorrichtung nach Anspruch 1,
dadurch gekennzeichnet, daß das Hilfselement (18) mit der Hülse (16) zusammen geformt ist.

3. Vorrichtung nach Anspruch 1,
dadurch gekennzeichnet, daß der Trageaufbau (10) zwei parallele elastische Vorsprünge (24) an diametral gegenüberliegenden Seiten des Lochs (20) aufweist zum elastischen Rasteingriff in entsprechend geformte Schlitze (22) in dem Hilfselement (18), wobei die Abmessungen der Schlitze (22) derart sind, daß sie eine vorbestimmte Drehung des Hilfselements (18) bezüglich des Trageaufbaus (10, 10b) ermöglichen.

## Revendications

1. Dispositif pour manoeuvrer des parties mobiles, en particulier des parties de systèmes de conditionnement d'air de véhicule automobile, du type comportant un levier de manoeuvre (12) articulé à une structure support (10) et un câble flexible (14) de transmission du mouvement, interposé entre le levier de manoeuvre (12) et la partie mobile et présentant une gaine (16) fixée, en au moins l'une de ses extrémités, à la structure support (10), l'extrémité (16a) de la gaine (16) étant fixée à un élément auxiliaire (18) articulé à la structure support (10, 10b) de façon que l'orientation de l'extrémité (16a) de la gaine (16) puisse varier au cours de la manoeuvre du levier (12); dispositif caractérisé par le fait que l'élément auxiliaire (18) comporte une goupille (18b) autorisant une articulation latérale, pour venir en prise, par déformation élastique, dans un trou convenable (20) prévu dans la structure (10b), ainsi qu'au moins une fente (22) pour coopérer avec une patte correspondante (24, 24a) solidaire de la structure support (10b, 10) pour limiter la rotation de l'élément auxiliaire (18) autour de la goupille (18b).

2. Dispositif selon la revendication 1, caractérisé par le fait que l'élément auxiliaire (18) est co-moulé avec la gaine (16).

3. Dispositif selon la revendication 1, caractérisé par le fait que la structure support (10) présente deux pattes élastiques parallèles (24), des côtés diamétralement opposés du trou (20), pour venir en prise, par déformation élastique, dans des fentes profilées (22) correspondantes prévues dans l'élément auxiliaire (18), les dimensions des fentes (22) étant telles qu'elles permettent une rotation prédéterminée de l'élément auxiliaire (18) par rapport à la structure support (10, 10b).
